# EUROPEAN PATENT APPLICATION

(11) **EP 2 717 171 A1**
(43) Date of publication of application: **09.04.2014**
(21) Application number: 13186803.6
(22) Date of filing: 01.10.2013
(51) Int. Cl.: G06F 17/22, G06F 17/24, G06Q 10/06

(54) **Electronic device including mind-map user interface and method for manipulating mind-map using the same**

(30) Priority: 02.10.2012 KR 20120109676
(71) Applicant: Estsoft Corp., Seoul 137-867 (KR)
(72) Inventor: Kim, Jang-Joong, 137-814 Seoul (KR)
(74) Representative: ABG Patentes, S.L.

(57) **Abstract**

An electronic device includes a display, at least one processor, a memory, and a mind-map user interface stored in the memory, executed by the processor, and configured to create or edit a plurality of topic objects which are formed of user-entered input data and connected to each other in a hierarchical tree structure. The processor is configured to display on the display the plurality of topic objects distributed in the hierarchical tree structure when the mind-map user interface is executed. At least one of the plurality of topic objects contains text string data including numeric data and an arithmetic identifier, and also at least one of the plurality of topic objects contains text string data including a function identifier which indicates a predefined function. The processor is further configured to convert specific text string data, corresponding to the numeric data combined with the arithmetic identifier among the text string data contained in subordinate topic objects connected to a specific topic object having the function identifier, into equivalent numeric string data, and to calculate a result value of the function indicated by the function identifier on the basis of the numeric string data.

## Description

### TECHNICAL FIELD

The present invention relates to technology of a mind-map user interface and, more particularly, to an electronic device and method for providing a mind-map user interface that allows the creation and edit of various topic objects formed of user-entered input data and distributed in a hierarchical tree structure.

### BACKGROUND

Normally a mind-map is a diagram used to visually outline information. A mind-map is often created around a single word or text, placed in the center, to which associated ideas, words and concepts are added. Major categories radiate from a central node, and lesser categories are sub-branches of larger branches. Categories can represent words, ideas, tasks, or other items related to a central key word or idea.

Meanwhile, a user interface refers to hardware or software that aids an easier exchange of information between a user and a system. Typically a user interface may be classified into a command line interface which allows a user to directly enter a desired command or information, a menu driven interface which allows transmission of a command or information through a selection of menu, and a graphic user interface which allows transmission of a command or information through various pointing devices such as a touch pen, a mouse, a track ball, a joystick, and the like.

Particularly, a mind-map user interface refers to a specific user interface that enables a user to perform a mind-mapping process through an electronic device. A conventional mind-map user interface is configured to act as a tool for creating a hierarchical tree structure by simply connecting subordinate objects to a central object. In this tree structure, a central object and subordinate objects are connected to each other through branches. Specifically, first-level subordinate objects are connected to at least one central object, and further, second-level subordinate objects are connected to the respective first-level subordinate objects. Such objects may be formed of various kinds of data, e.g., images, figures, hyperlinks, notes, etc., entered by a user with regard to specific theme (i.e., topic).

Unfortunately, a conventional mind-map user interface merely provides a function as an editor for connecting individual user-entered objects in a hierarchical tree structure. Namely, a conventional mind-map user interface fails to provide a function to calculate or process user-entered data created for respective objects.

### SUMMARY

Accordingly, to address the above-mentioned problems and/or disadvantages and to offer at least the advantages described below, the present invention provides an electronic device and method for providing a mind-map user interface that not only performs calculation, based on a predefined function, of input data contained in user-entered topic objects distributed in a hierarchical tree structure, but also displays the result of calculation.

According to one aspect of the present invention, provided is an electronic device that comprises a display, at least one processor, a memory, and a mind-map user interface stored in the memory, executed by the processor, and configured to create or edit a plurality of topic objects which are formed of user-entered input data and connected to each other in a hierarchical tree structure. The processor is configured to display on the display the plurality of topic objects distributed in the hierarchical tree structure when the mind-map user interface is executed. In this electronic device, at least one of the plurality of topic objects contains text string data including numeric data and an arithmetic identifier, and also at least one of the plurality of topic objects contains text string data including a function identifier which indicates a predefined function. Additionally, the processor is further configured to convert specific text string data, corresponding to the numeric data combined with the arithmetic identifier among the text string data contained in subordinate topic objects connected to a specific topic object having the function identifier, into equivalent numeric string data, and to calculate a result value of the function indicated by the function identifier on the basis of the numeric string data.

In the electronic device, the function identifier may include an arithmetic type identifier indicating an arithmetic type, and an arithmetic level identifier specifying a level of the subordinate topic objects to be calculated according to the arithmetic type.

According to another aspect of the present invention, provided is a method for manipulating a mind-map in an electronic device through a mind-map user interface stored in a memory, executed by a processor, and configured to create or edit a plurality of topic objects which are formed of user-entered input data and connected to each other in a hierarchical tree structure. The method comprises displaying on a display the plurality of topic objects distributed in the hierarchical tree structure when the mind-map user interface is executed, entering text string data including numeric data and an arithmetic identifier in at least one of the plurality of topic objects, entering text string data including a function identifier which indicates a predefined function in at least one of the plurality of topic objects, converting specific text string data, corresponding to the numeric data combined with the arithmetic identifier among the text string data contained in subordinate topic objects connected to a specific topic object having the function identifier, into equivalent numeric string data, and calculating a result value of the function indicated by the function identifier on the basis of the numeric string data.

According to still another aspect of the present invention, provided is a method for manipulating a mind-map in an electronic device through a mind-map user interface stored in a memory, executed by a processor, and configured to create or edit a plurality of topic objects which are formed of user-entered input data and connected to each other in a hierarchical tree structure. The method comprises recognizing a function identifier from text string data contained in at least one of a plurality of topic objects; extracting numeric data from text string data including an arithmetic identifier specified by the function identifier by searching for text string data contained in subordinate topic objects connected to a specific topic object having the function identifier; converting specific text string data corresponding to the extracted numeric data into equivalent numeric string data; and calculating a function value with regard to the function identifier according to an arithmetic type indicated by the function identifier on the basis of the numeric string data.

According to yet another aspect of the present invention, provided is a computer-readable storage medium storing therein a program executing the above method for manipulating a mind-map in an electronic device through a mind-map user interface.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

FIG. 1 is a block diagram illustrating an electronic device in accordance with an embodiment of the present invention.
FIG. 2 is a block diagram illustrating a memory including a mind-map user interface and database in an electronic device in accordance with an embodiment of the present invention.
FIG. 3 shows an example of a mind-map formed of topic objects distributed in a hierarchical tree structure in accordance with an embodiment of the present invention.
FIG. 4 is a flow diagram illustrating a mind-map manipulation method in accordance with an embodiment of the present invention, the method including retrieving numeric data from topic objects on the basis of a user-entered function identifier and calculating a function value by a specified arithmetic type.

### DETAILED DESCRIPTION

The following description with reference to the accompanying drawings is provided to assist in a comprehensive understanding of various embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the present invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present invention is provided for illustration purpose only and not for the purpose of limiting the present invention as defined by the appended claims and their equivalents.

It is to be understood that the singular forms "a," "an," and "the" include plural referents unless the context clearly dictates otherwise. Thus, for example, reference to "an input unit" includes reference to one or more of such input units.

This invention may be applied to a great variety of electronic devices, such as computers (including any kind of portable computers), personal digital assistants (PDAs), mobile phones, and smart phones, which includes a display, a processor, a memory, and a set of programs or commands to be executed by the processor.

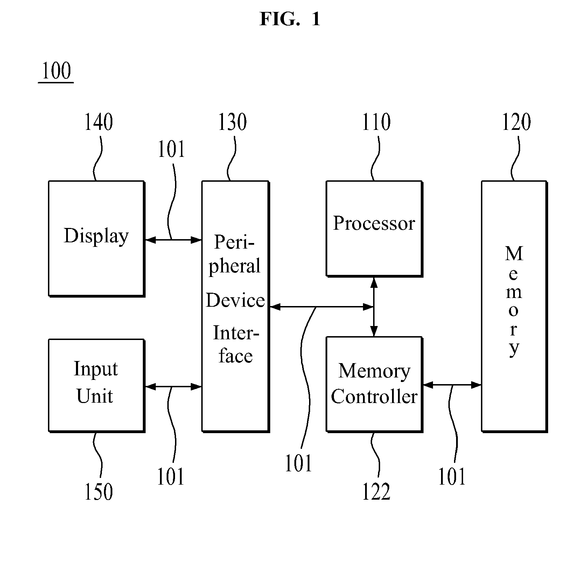

Now, an electronic device will be described with reference to FIG. 1. FIG. 1 is a block diagram illustrating an electronic device 100 having a display 140 in accordance with an embodiment of the present invention.

Referring to FIG. 1, the electronic device 100 includes at least one processor 110, a memory 120 having at least one computer-readable storage medium, a memory controller 122, a peripheral device interface 130, the display 140, and an input unit 150. The electronic device 100 may further include a power supply unit, a communication module, a radio frequency (RF) circuit, an audio processing circuit, a speaker, a microphone, various sensors, or the like. Additionally, the electronic device 100 may be configured such that the above elements can communicate with each other through at least one bus or signal line 101. The above-discussed device 100 may essentially or optionally include any other elements, not shown in FIG. 1, and some of the above-mentioned elements in the device 100 may be omitted or replaced with another.

The memory 120 may include a high-speed random access memory (RAM) and also include at least one of a magnetic disk, a flash memory, and any other nonvolatile memory. The memory controller 122 may control access to the memory 120 by any other element such as the processor 110 and the peripheral device interface 130.

The peripheral device interface 130 connects any peripheral device for input and output of the electronic device 100 to the processor 110 and the memory 120. The processor 110 performs various functions of the electronic device 100 and also processes associated data by executing a set of software programs and/or commands stored in the memory 120. In some embodiments, any type display having a touch-sensitive function may be used as a peripheral device for input and output of the electronic device 100. In this case, user-entered input data may be received through the touch-sensitive display as well as the input unit 150. The input unit 150 may include a physical button, a dial, a slider switch, a joystick, a click wheel, a keyboard, a mouse, a touch pad (having a touch-sensitive surface without offering a visual display unlike the touch-sensitive display), and the like.

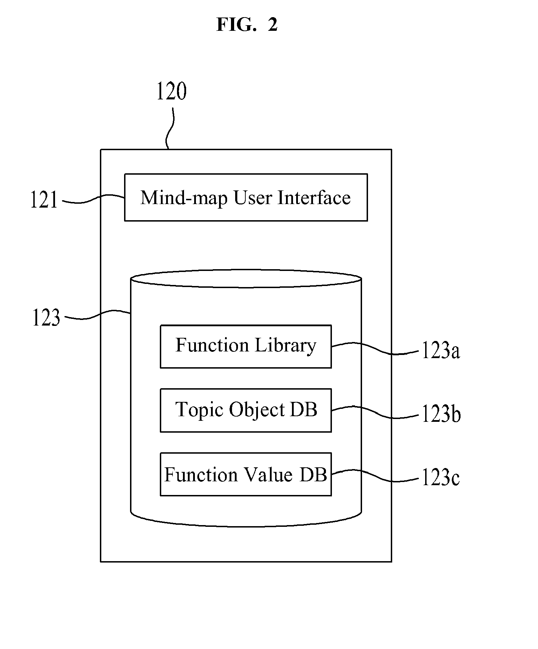

Meanwhile, as shown in FIG. 2, the memory 120 may store a mind-map user interface 121 and database 123. The mind-map user interface 121 may be executed by the processor 110 and displayed on the display 140 through which a user can create or edit topic objects formed of user-entered input data and distributed in a hierarchical tree structure. A user's action to create or edit topic objects may be performed through the display 140 or the input unit 150 and related input data may be recorded in the database 123 through the peripheral device interface 130. The database 123 may include, but not limited to, a function library 123a, topic object database 123b and function value database 123c which may store therein or retrieve therefrom various data in response to a user's command.

The mind-map user interface 121 allows the creation or edit of various topic objects on the basis of a user's input data. Namely, a user triggers the mind-map user interface 121 in the electronic device 100 through the processor 110 and then, by using the input unit 150, creates or edits topic objects in a mind-map displayed on the display 140. A plurality of topic objects may be classified into central objects and subordinate objects. The central object has information about main theme. The subordinate objects are composed of first-level subordinate objects connected to the central objects, and second-level subordinate objects connected to the first-level subordinate objects. Thus, each central object may have a plurality of subordinate objects including the first-level subordinate objects and the second-level subordinate objects. The respective topic objects may include, but not limited to, user-entered text string data, image data such as pictures or photos, and the like.

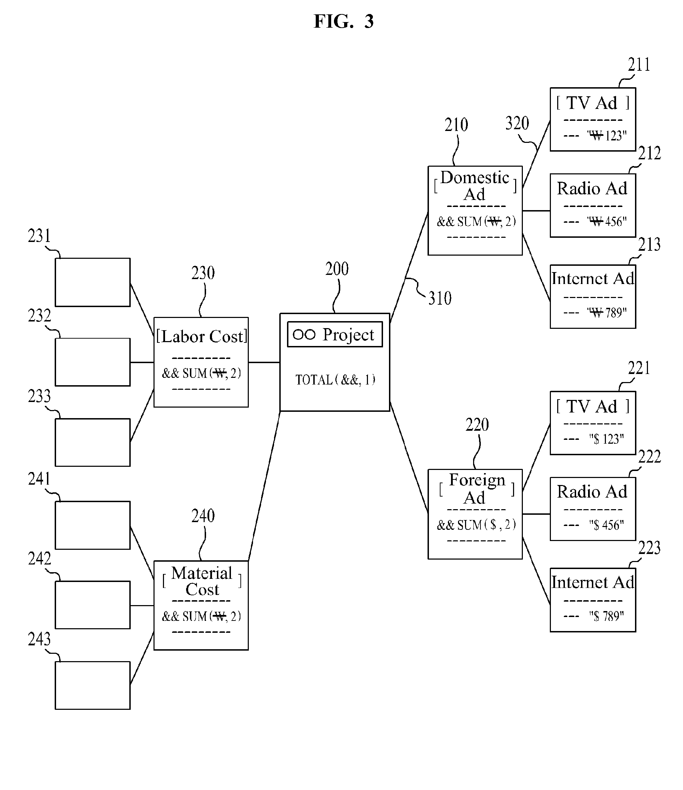

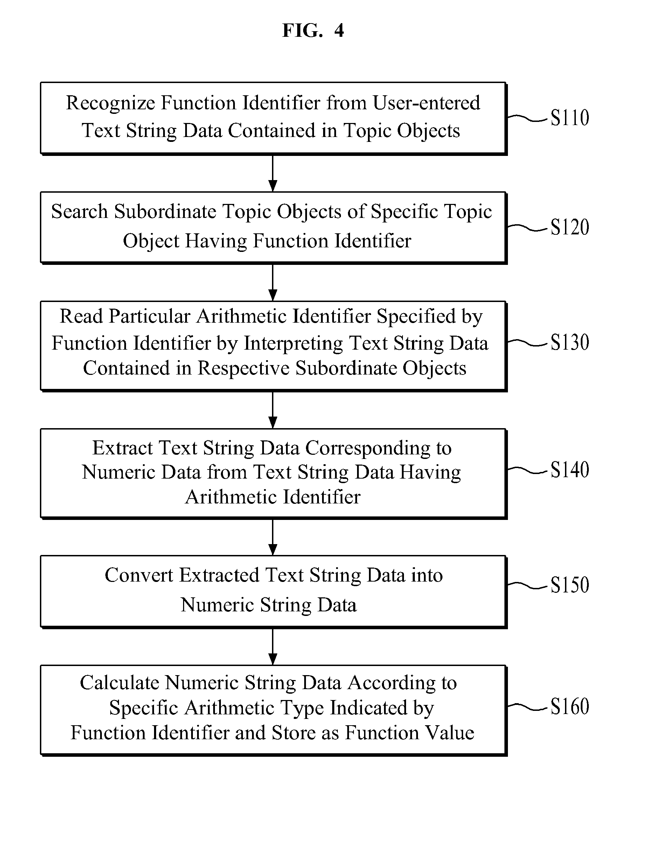

Now, a method for manipulating a mind-map through a mind-map user interface in accordance with an embodiment of this invention will be described in detail with reference to FIGS. 3 and 4. Although a normal mind-map contains many central objects each of which is connected to multi-level subordinate objects, the following description will be focused, for simplicity, on a single central object connected to two-level subordinate objects.

At the outset, when a user's trigger input is received, the electronic device displays on the display a mind-map user interface that allows the creation or edit of various topic objects in response to a user's input. For example, FIG. 3 shows a mind-map having a central object 200 "OO project" entered by a user. The central object 200 is connected to a plurality of first-level subordinate objects 210, 220, 230 and 240 by first-level branches 310, and each of the first-level subordinate objects 210, 220, 230 and 240 is connected to a plurality of second-level subordinate objects 211∼213, 221∼223, 231∼233 or 241∼243 by second-level branches 320. For example, the first-level subordinate object 210 is connected to three second-level subordinate objects 211, 212 and 213. All of the first-level subordinate objects and the second-level subordinate objects belong to the subordinate objects of the central object 200.

Additionally, as shown in FIG. 3, at least one of topic objects may contain character string data including numeric data and arithmetic identifier. For example, the second-level subordinate objects 211, 212 and 213 contains, in the form of text string data, user-entered input data about "TV advertisement", "radio advertisement" and "Internet advertisement", respectively, with regard to "domestic advertisement" which is the topic theme of the first-level subordinate object 210. Further, each of the second-level subordinate objects 211, 212 and 213 contains user-entered numeric data together with a currency symbol. In this case, the mind-map user interface recognizes, in the form of text string data, the data attribute of user-entered input data in the respective second-level subordinate objects 211, 212 and 213. Namely, when a user enters numeric data in connection with the theme of each second-level subordinate object 211, 212 or 213, the data attribute of user-entered numeric data is recognized in the form of text string data. Also, a user enters an arithmetic identifier in connection with numeric data. In FIG. 3, won ( 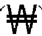 ) which is the Korean currency symbol contained in the second-level subordinate objects 211, 212 and 213 acts as an arithmetic identifier. Similarly, each of the second-level subordinate objects 221, 222 and 223 connected to the first-level subordinate object 220 having topic theme "foreign advertisement" contains text string data that includes numeric data using the Korean monetary unit as an arithmetic identifier.

Meanwhile, at least one of topic objects may contain text string data that includes a function identifier which indicates a predefined particular function. For example, in FIG. 3, each of the first-level subordinate objects 210, 220, 230 and 240 may contain a function identifier "SUM" within text string data. In this case, a function identifier "SUM" is one of functions predefined in the function library 123a and acts as an arithmetic type identifier that indicates a "sum arithmetic" type. Additionally, a function identifier may have an arithmetic level identifier that specifies the level of subordinate objects to be calculated according to a specific arithmetic type. For example, in FIG. 3, the first-level subordinate object 210 contains text string data "SUM" which is an arithmetic type identifier indicating a sum arithmetic, a currency symbol " 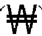 " which is information about an arithmetic identifier specifying data to be calculated according to an arithmetic type indicated by an arithmetic type identifier, and text string data "2" which indicates the level of subordinates as an arithmetic level identifier.

Referring to FIG. 4, if there is any function identifier in text string data entered by a user with regard to respective topic objects, the processor 110 recognizes at step S110 a function identifier received through the mind-map user interface 121. For example, when text string data "SUM( 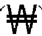 , 2)" is received as a function identifier for a first-level subordinate object 210, the processor 110 recognizes this function identifier at step S110. Then, the processor 110 searches for second-level subordinate objects 211, 212 and 213 connected to the first-level subordinate object 210 at step S120, and interprets text string data contained in the respective second-level subordinate objects 211, 212 and 213 through the topic object database 123b at step S130. At this step, the processor 110 reads a particular arithmetic identifier " 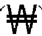 " specified by a function identifier "SUM" among text string data contained in the respective second-level subordinate objects 211, 212 and 213. Furthermore, the processor 110 extracts specific text string data corresponding to numeric data combined with the function identifier at step S140, and then converts the extracted text string data into equivalent numeric string data at step S150. Thereafter, the processor 110 calculates the numeric string data according to a specific arithmetic type indicated by the function identifier, and then stores, as a function value, the result of calculation in the function value database 123c at step S160. In this case, since the function identifier "SUM" means sum arithmetic, a sum value of numeric data specified by a currency symbol " 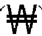 " and contained in the second-level subordinate objects 211, 212 and 213 is calculated as a function value.

Similarly, in case of another first-level subordinate object 220, the processor 110 interprets, based on text string data representing a function identifier "SUM($, 2), text string data including an arithmetic identifier "$" among text string data contained in second-level subordinate objects 221, 222 and 223. Then the processor 110 stores the sum of interpreted data, as a function value of the function identifier "SUM($, 2)", in the function value database 123c. Particularly, since this function identifier has an arithmetic level identifier "2", the processor 110 adds text string data of any third-level subordinate object to calculation of a function value if there is such a third-level subordinate object.

Meanwhile, the central object 200 may also contain text string data representing a function identifier. Namely, as shown in FIG. 3, the central object 200 may have a function identifier "TOTAL(&&, 1)". In this case, the processor 110 reads and calculates specific text string data indicated by an arithmetic identifier "&&" in first-level subordinate objects 210, 220, 230 and 240. For example, if the arithmetic identifier "&&" is prefixed to a function identifier "SUM" in the first-level subordinate objects as shown in FIG. 3, corresponding function values are converted into numeric string data. Then a function value of the numeric string data is calculated through a function arithmetic type indicated by the function identifier "TOTAL" of the central object 200 and stored in the function value database 123c.

As discussed hereinbefore, this invention provides an advanced mind-map user interface that can perform and display selected function arithmetic in addition to a mere display of topic theme. Considering a function of a normal mind-map user interface, any input data should be entered in the form of simple text string data because such data is not distinguishable by means of fields. Therefore, in case a user desires to calculate numeric data contained in topic objects, such numeric data should be interpreted one by one before calculation. In contrast, the mind-map user interface of this invention adopts both a function identifier representing an arithmetic type and an arithmetic identifier forming the basis of calculation, so that selection, calculation and processing of data can be easier and more convenient.

While this invention has been particularly shown and described with reference to an exemplary embodiment thereof, it will be understood by those skilled in the art that various changes in form and details may be made therein without departing from the spirit and scope of the invention as defined by the appended claims.

## Claims

1. An electronic device comprising:
a display;
at least one processor;
a memory; and
a mind-map user interface stored in the memory, executed by the processor, and configured to create or edit a plurality of topic objects which are formed of user-entered input data and connected to each other in a hierarchical tree structure,
wherein the processor is configured to display on the display the plurality of topic objects distributed in the hierarchical tree structure when the mind-map user interface is executed,
wherein at least one of the plurality of topic objects contains text string data including numeric data and an arithmetic identifier,
wherein at least one of the plurality of topic objects contains text string data including a function identifier which indicates a predefined function, and
wherein the processor is further configured to convert specific text string data, corresponding to the numeric data combined with the arithmetic identifier among the text string data contained in subordinate topic objects connected to a specific topic object having the function identifier, into equivalent numeric string data, and to calculate a result value of the function indicated by the function identifier on the basis of the numeric string data.

2. The electronic device of claim 1, wherein the function identifier includes an arithmetic type identifier indicating an arithmetic type, and an arithmetic level identifier specifying a level of the subordinate topic objects to be calculated according to the arithmetic type.

3. A method for manipulating a mind-map in an electronic device through a mind-map user interface stored in a memory, executed by a processor, and configured to create or edit a plurality of topic objects which are formed of user-entered input data and connected to each other in a hierarchical tree structure, the method comprising:
recognizing a function identifier from text string data contained in at least one of a plurality of topic objects;
extracting numeric data from text string data including an arithmetic identifier specified by the function identifier by searching for text string data contained in subordinate topic objects connected to a specific topic object having the function identifier;
converting specific text string data corresponding to the extracted numeric data into equivalent numeric string data; and
calculating a function value with regard to the function identifier according to an arithmetic type indicated by the function identifier on the basis of the numeric string data.

4. The method of claim 3, wherein the function identifier includes an arithmetic type identifier indicating the arithmetic type, and an arithmetic level identifier specifying a level of the subordinate topic objects to be calculated according to the arithmetic type.

5. A computer-readable storage medium storing therein a program executing the method of claim 3 or 4 for manipulating a mind-map in an electronic device through a mind-map user interface.
